# EUROPEAN PATENT APPLICATION

(11) **EP 1 486 718 A1**
(43) Date of publication of application: **15.12.2004**
(21) Application number: 04468009.8
(22) Date of filing: 02.06.2004
(51) Int. Cl.: F16L 55/134

(54) **Pneumatic pipe plug for pipelines, especially gas pipelines**

(30) Priority: 11.06.2003 SI 200300142
(71) Applicant: Savatech druzba za proizvodnjo in trzenje gumenotehnicnih proizvodov in pnevmatike, d.o.o., 4000 Kranj (SI)
(72) Inventor: Janc, Samo, 4294 Krize (SI); Benedik, Marko, 4209 Zabnica (SI); Kezele, Goran, 4000 Kranj (SI); Kurent, Primoz, 4290 Trzic (SI); Munih, Pravel, 4000 Kranj (SI)
(74) Representative: Ros, Zlata

(57) **Abstract**

A pneumatic pipe plug for the sealing of pipelines of various nominal diameters can be inserted through connections of relatively small diameters in a wall of a pipeline and is intended for high working and dynamic pressures in order to ascertain good sealing, whereat the plug is also conceived in a way to be resistant to mechanical damages that could occur when inserting the plug into or removing it from a connection in the wall, said connection being often sharp-edged. The pipe plug of the invention is conceived as a tube element (1) in the sense of an ellipsoid of revolution, whereat the thickness of a wall (8) of the clement (1) becomes thinner towards the centre and the wall can also contain a gummed cord (9) running in several, preferably two layers so that, with respect to the longitudinal axis of the element (1), one cord (9) lies obliquely to one end and another cord (9) to another end for an angle α measured from the central line and amounting to 0 - 20°C.

## Description

### Subject of Invention

The subject of the invention is a pneumatic pipe plug for pipelines, preferably gas pipelines, which is used for the working sealing of pipelines, especially gas pipelines during repair or leak testing, whereat it is inserted into the pipeline through a connection in the wall of the pipeline and can be used for the sealing of pipelines of a variety of nominal diameters.

### Technical Problem

The technical problem to be solved by the present invention is how to conceive such a pneumatic pipe plug that will be applicable to the sealing of pipelines of various nominal diameters despite the fact that it can be inserted through connections of relatively small diameters located in the wall of the pipeline and is foreseen for high working pressures and dynamic pressures in order to ascertain good sealing, whereat the plug should also be resistant to mechanical damages that could occur when inserting the plug into or removing it from a connection in the wall, said connection being often sharp-edged.

### Prior Art

A plug of this type is known to be produced by the company Kleiss & co bv and it consists of a tube-like cylindrical part made of latex reinforced by fibres running parallel or obliquely to the longitudinal axis of the cylindrical part. The fibres are bound with latex by means of a special binder. Either end of the cylindrical part is provided with a connecting element for working gas supply and a closing element, said elements being preferably of metal.

A disadvantage thereof is a multi-stage manufacturing process: the manufacture of the cylindrical element, the placement of fibres, the fastening of fibres, the fitting of the connecting and closing elements, which increases the price of the product. A further disadvantage is the sensitivity to mechanical damages. The described construction only allows low working and dynamic pressures, which limits its range of use.

Another known plug is that of the company Staedtler + beck GmbH, which has a rubber basis in the shape of a ball and covered by textile. Since it is not reinforced, it is only suitable for lower working and dynamic pressures. Consequently, the sealing of pipelines is poorer.

### Solution to the Technical Problem

The described technical problem is solved by a pipe plug of the invention, whose essential characteristic is that it is manufactured of a tube element having the form of an ellipsoid of revolution and made of rubber and reinforced by rubber cord, whereat the wall of the element becomes thinner in the direction from either end towards the centre so that the thicker wall sections are capable of accepting a higher working pressure because these two sections are free, whereas the central thinner wall section is intended for extending and tightly fitting to the wall of the pipeline, which simultaneously acts as an additional support to the thinner central section of the plug wall at accepting a higher working or dynamic pressure in the plug. The plug of the invention can cover a larger range of a variety of pipeline diameters at higher working and consequently dynamic pressures.

The cord integrated in the wall additionally contributes to a higher load-carrying capacity of the product. The cord is preferably made of two layers with the fibres of either layer running obliquely with respect to the longitudinal axis of the plug and in different directions.

Within the plug there is a screw spring in a tube running between both ends of the plug and giving additional stiffness to the plug in uninflated mode, which is needed when the uninflated plug is pushed into the pipeline through a lateral connection in the pipeline wall.

The essence of the invention will now be described in more detail by way of an embodiment and with reference to the accompanying drawings in which:

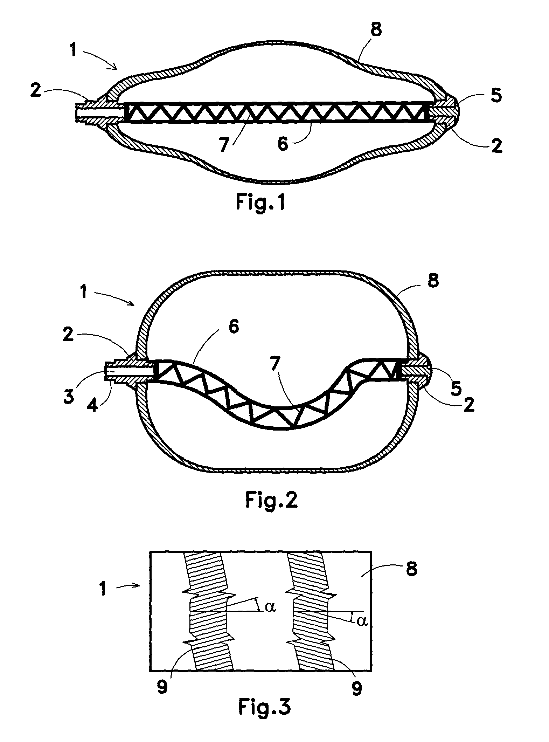

Fig. 1 shows a longitudinal cross-section of the plug of the invention in uninflated state,
Fig. 2 shows the same in inflated state,
Fig. 3 is a schematic view of the position of the cord in the wall of the inventive plug before vulcanization.

A pneumatic pipe plug for pipelines, preferably gas pipes consists of an elastic tube element 1 shaped as an ellipsoid of revolution, which is at least at one end closed by a closing element 2 having an opening 3, in which a connecting element 4 is positioned, said element serving as a connection with the pipeline for the supply of compressed gas, preferably air for the inflation of the plug. At an opposite closing element 2 there is an approximately hemispherical end element 5, which acts as the front part of the plug thus simplifying the guiding of the plug through the connection in the wall of the pipeline into the pipeline.

Should the sealing or closing of a section of the pipeline between at least two points be needed, at least two plugs are connected in a row so that the second plug is inflatable together with the first plug. In this case both closing elements 2 on the first plug are provided with connecting elements 4.

Both closing elements 2 are simultaneously mutually connected by an elastic element 7, preferably a screw spring, which facilitates the guiding of the uninflated plug through the wall connection on the pipeline. When shifted through the connection in the wall of the pipeline, the element 7 within a tube 6 offers enough stiffness for the plug to be pushed without bending, whereas during inflation in the pipeline the element 7 within the tube 6 can bend and allow the shrinking of the plug in axial direction due to its extension in transversal direction.

If the plug is intended for a consecutive connection of a pressure medium, the tube 6 and the elastic element 7 lie preferably coaxially.

A wall 8 of the element 1 is such that its thickness diminishes towards the centre and can contain a gummed cord 9. This cord 9 can run in several layers, preferably in two layers so that, with respect to the longitudinal axis of the element 1, one cord 9 lies obliquely to one side and another cord to the other side for an angle α, measured from the central line and amounting to 0 - 20°.

The wall 8 is manufactured from rubber containing at least one layer of the gummed cord 9 according to the vulcanization method, during which also the closing elements 2 are placed into the element 1.

To suit the requirements, the plugs may be manufactured in several dimensions so that they cover a very wide range of diameters of pipelines or gas lines they are intended for.

## Claims

1. A pneumatic pipe plug for pipelines, preferably gas pipes consisting of an elastic tube element (1) closed at both ends by closing elements (2), preferably made of rubber and metal, whereat in at least one element (2) there is an opening (3), in which a connecting element (4) is positioned, said element serving as a connection with a pipeline for the supply of compressed gas, preferably air for the inflation of the plug, and at the opposite closing element (2) there is an approximately hemispherical end element (5) acting as the front part of the plug thus simplifying the guiding of the plug through the connection in the wall of the pipeline, and in the element (1) between the closing elements (2) there is a tube (6) containing an elastic element (7), preferably a screw spring, **characterized in that** the tube element (1) is in the form of an ellipsoid of revolution.

2. A pneumatic pipe plug according to claim 1, **characterized in that** the thickness of a wall (8) of the element (1) becomes thinner towards the centre.

3. A pneumatic pneumatic plug according to claims 1 and 2, **characterized in that** the wall (8) of the element (1) can contain a gummed cord (9).

4. A pneumatic pipe plug according to claims 1 to 3, **characterized in that** the cord (9) in the wall (8) can run in several layers, preferably in two layers so that, with respect to the longitudinal axis of the element (1), one cord (9) lies obliquely to one side and another cord (9) to the other side for an angle α measured from the central line and amounting to 0 - 20°.

5. A pneumatic pipe plug according to claims 1 to 3, **characterized in that** both closing elements (2) can be equipped with connecting elements (4), whereat inside the plug there is a connection for a pressure medium via an elastic tube (6) between two connecting elements (4).

6. A pneumatic end plug according to claims 1 to 5, **characterized in that** the wall (8) of the element (1) is manufactured according to vulcanization process.
